# EUROPEAN PATENT APPLICATION

(11) **EP 1 976 236 A2**
(43) Date of publication of application: **01.10.2008**
(21) Application number: 08250800.3
(22) Date of filing: 10.03.2008
(51) Int. Cl.: H04L 29/08, G06F 17/30

(54) **Content delivery system, terminal, and content delivery method**

(30) Priority: 09.03.2007 JP 2007060743
(71) Applicant: NEC Corporation, Minato-ku Tokyo (JP)
(72) Inventor: Tanaka, Masashi, Tokyo (JP)
(74) Representative: Reeve, Nicholas Edward

(57) **Abstract**

A content delivery system can deliver information content matching with a user's attribute or preference. The system includes information delivery means, service history recording means, media retrieval means, and message transmission means. The information delivery means provides an information delivery service to a terminal. The service history recording means records a service history of the terminal. The media retrieval means refers to the service history of the terminal recorded by the service history recording means, retrieves content matching with a service selection tendency of the terminal from among contents capable of being delivered to the terminal from the information delivery means, and generates content access information for accessing the content. Message transmission means transmits to the terminal a command to be executed by the terminal and the content access information, using a SIP MESSAGE method. The content delivery system causes the terminal to execute the command and access the information delivery means using the content access information.

## Description

### FIELD OF THE INVENTION

The present invention relates to a content delivery system, a terminal, and a content delivery method. More specifically, the invention relates to a content delivery system, a terminal, and a content delivery method that can be suitably used for push-type content delivery.

### BACKGROUND OF THE INVENTION

As a session control protocol in Peer to Peer (P2P) multimedia communication on the Internet, a SIP (Session Initiation Protocol) is standardized as RFC3261. In addition to use in a VoIP system, application of the SIP to control over a chatting function (Instant Message), a presence function, a home information appliance, or the like has been proposed.

In the push-type content delivery, a user registers content which he desires to view or listen to and passively receives information from a transmitter. In such delivery, when the delivery content is large in number or when the content which the user wishes to view or listen to extends over a large number of categories, an amount of information to be delivered to the user becomes immense. Then, it becomes impossible for the user to select the content which he really desires to view or listen to. Thus, Patent Document 1, Japanese Patent Kokai Publication No. JP -P2006-350500A, proposes an information channel registering system in which, using a technology on the SIP, RSS (RDF Site Summary) URL (Uniform Resource Locator) lists are exchanged and information channel registration is exchanged between content reproduction devices with similar browsing histories.

However, in the technology in Patent Document 1 described above, exchange of the URL lists between users (content reproducing devices) is only performed. Thus, there is a problem that selective (active) information transmission which pinpoints an information recipient from a service provider that desires to transmit a video, an advertisement, or other information content to the users cannot be performed. Patent Document 1 proposes provision of a preference matching server that provides a list of content reproducing devices having similar browsing histories, as well. The preference matching server, however, only meditates exchange of the URL lists between the users, and implementation of selective (active) information transmission from the service provider is impossible.

We have therefore appreciated that it would be desirable to provide a content delivery system, a terminal, and a content delivery method in which, without requiring a terminal user input of content or the like that the terminal user desires to view or listen to, access to content that matches with an attribute or a preference of the terminal user is allowed.

### SUMMARY OF THE INVENTION

According to first aspect of the present invention, there is provided a content delivery system that performs content delivery to a terminal conforming to a SIP. The content delivery system includes: information delivery means for providing an information delivery service to the terminal; and service history recording means for recording a service history of the terminal. The system further comprises media retrieval means for referring to the service history of the terminal recorded by the service history recording means, retrieving content matching with a service selection tendency of the terminal from among contents capable of being delivered from the information delivery means to the terminal, and generating content access information for accessing the content. The system further comprises message transmission means for transmitting to the terminal a command to be executed by the terminal and the content access information, using a SIP MESSAGE method. The content delivery system causes the terminal to execute the command and access the information delivery means, using the content access information.

According to a second aspect of the present invention, there is provided a terminal including a function of receiving from the content delivery system described above a command to be executed and the content access information, using the SIP MESSAGE method. The terminal executes the command and receives the content using the content access information.

According to a third aspect of the present invention, there is provided a content delivery method to be carried out by using a content delivery system including information delivery means, service history recording means, media retrieval means, and message transmission means. The method includes: recording a service history of a terminal and transmitting the recorded service history of the terminal to a media retrieval means (e.g. server), by the service history recording means. The method further includes: referring to the service history of the terminal thus received, retrieving information on content matching with a service selection tendency of the terminal from content capable of being delivered from an information delivery means (e.g. server) to the terminal, and generating content access information for accessing the content, by the media retrieval means. The method still includes: transmitting to the terminal a command to be executed by the terminal and the content access information, using a SIP MESSAGE method, by the message transmission means; and executing the command transmitted and accessing the information delivery means (e.g. server), using the content access information, by the terminal.

The meritorious effects of the present invention are summarized as follows.
According to the present invention, delivery of content matching with an attribute or a preference of each terminal to each terminal becomes possible. The reason for this is that the present invention is so configured that content which matches with a service selection tendency of each terminal may be retrieved by referring to an information delivery service history of the terminal and may be introduced to the terminal.

### BRIEF DESCRIPTION OF THE DRAWINGS

Fig. 1 is a block diagram showing a system configuration in a first exemplary embodiment of the present invention;
Fig. 2 shows an example of a structure of a message used in the first exemplary embodiment of the present invention;
Fig. 3 shows an example of a service participation history management table used for service participation history management of each terminal in the first exemplary embodiment of the present invention;
Fig. 4 shows an example of a media collection management table used for storing information to be delivered to each terminal in the first exemplary embodiment of the present invention;
Fig. 5 is a sequence diagram showing a sequence of operations in the first exemplary embodiment of the present invention;
Fig. 6 is a block diagram showing a system configuration in a second exemplary embodiment of the present invention;
Fig. 7 shows an example of an information provider management table used for managing other service providers in the second exemplary embodiment of the present invention; and
Fig. 8 is a sequence diagram showing a sequence of operations in the second exemplary embodiment of the present invention.

### DETAILED DESCRIPTION OF PREFERRED EMBODIMENTS

The media retrieval means (or unit) may specify a delivery type, in addition to the content access information; and the message transmission means (or unit) may generate the command based on the delivery type.

The media retrieval means (or unit) may target an information delivery server of other service provider connected to a network as well, for the retrieval of the content matching with the service selection tendency of the terminal. The information delivery means (or unit) may comprise an information delivery server; the service history recording means (or unit) and the message transmission means (or unit) may comprise an information control server; and the media retrieval means (or unit) comprise a media retrieval server.

The retrieval media means (or unit) may collect information from any information delivery means (or unit) depending on either a cooperation contract or else.

Next, preferred modes for carrying out the present invention will be described in detail with reference to drawings.

### [First Exemplary Embodiment]

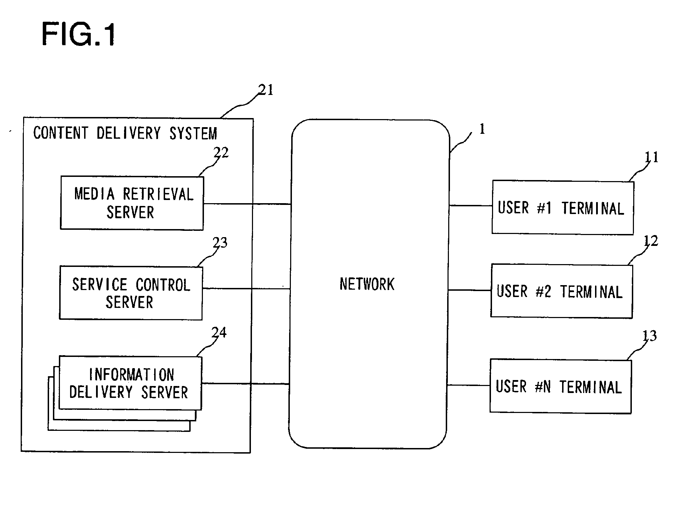

Fig. 1 is a block diagram showing a system configuration in a first exemplary embodiment of the present invention. Referring to Fig. 1, a network 1, a user #1 terminal 11, a user #2 terminal 12, and a user #N terminal 13, and a content delivery system 21 are shown. The content delivery system 21 is managed by a provider of a service (hereinafter, a provider that delivers information content being referred to as a "service provider"). The user #1 terminal 11, user #2 terminal 12, and user #N terminal 13 are used by subscribers of this service (hereinafter referred to as "users").

The network 1 is an IP network provided by a communication company, and is a communication network that guarantees a bandwidth and quality of service(QoS) for communication (NGN; Next Generation Network; refer to ITU-T recommendation Y. 2001 (12/2004)). The network 1 has a function of controlling a SIP communication session in order to guarantee the bandwidth and quality of service(QoS) for communication between each server installed in the content delivery system 21 and each terminal (client).

The network 1 provides respective communication functions for unicast communication that is communication between one server and one terminal (client), multicast communication that is communication between one server and a lot of specified terminals (clients), and broadcast communication that is communication between one server and a lot of unspecified terminals (clients).

Each of the user #1 terminal 11, the user #2 terminal 12, the user #N terminal 13, and a service control server 23 and an information delivery server 24 on a side of the content delivery system 21 has a SIP function, and requests session control to the network 1 in accordance with a SIP.

The user #1 terminal 11, user #2 terminal 12, and user #N terminal 13 are personal computers, portable information terminals, or customer premises terminals such as those for home information appliances, each of which includes a WEB browser function, a video reproducing function, a communication function using transmission and reception, a telephone and video communication function using transmission and reception, and a function of displaying a text information message. In this exemplary embodiment, the user # 1 terminal 11, user #2 terminal 12, and user #N terminal 13 are the personal computers and each have a function of simultaneously displaying on a display device thereof screens (display image-screens) of two or more functions selected from the respective functions described before.

A media retrieval server 22 is a server that refers to history information on information content viewed or listened to by a user, retrieves (collects information from) associated information content, and manages the retrieved information content.

The service control server 23 has a function of executing terminal control over the user #1 terminal 11, user #2 terminal 12, and user #N terminal 13 and executing application control. Details of the service control server 23 will be described later. An application refers to an application program for implementing the WEB browser function, video reproducing function, communication function using transmission and reception, telephone and video communication function using transmission and reception, and the function of displaying a text information massage of the user #1 terminal 11, user #2 terminal 12, and user #N terminal 13.

The information delivery server 24 has one of functions of video delivery, WEB delivery, and transmitting a text information message to the user #1 terminal 11, user #2 terminal 12, and user #N terminal 13.

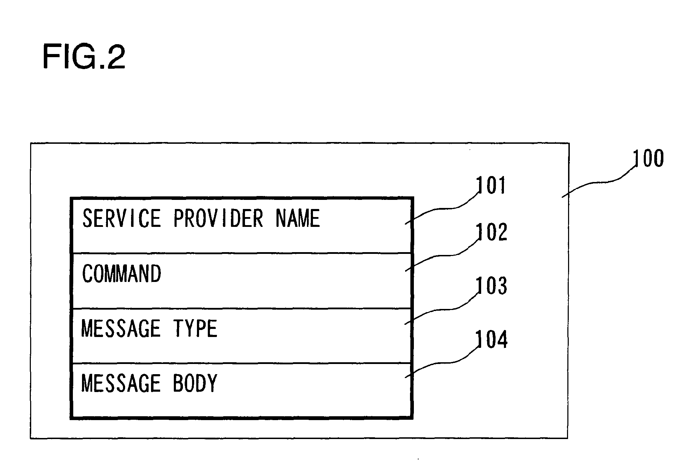

Now, a structure of a message used by the service control server 23 for executing control over the user #1 terminal 11, user #2 terminal 12, and user #N terminal 13 and the application control will be described. Fig. 2 is an example of the structure of the message to be transmitted to each of the terminals 11 to 13 from the service control server 23, using a SIP MESSAGE method (protocol).

Referring to Fig. 2, a message 100 is formed of a service provider name 101, a command 102, a message type 103, and a message body 104.

ID information given for each service provider is stored in the service provider name 101 in order to recognize and determine which service provider controls each user terminal.

Command information for executing control over the user terminals or executing the application control by the service control server 23 is stored in the command 102. For example, a command for automatically starting the application, storing (caching) information related to the application control, or updating the application being displayed, a command for registering information for controlling the application in a database held by each terminal or deleting registered information held by the database, a command for automatically controlling transmission from an own terminal or reception of transmission from other terminal to the own terminal so as to implement the communication function, a command for controlling to disconnect a communication state, a command for terminating the application run by each user terminal, a command for notifying a state of the controlled terminal, or the like is stored.

Type information on information for accessing the information delivery server 24 is stored in the message type 103. For example, type information on information described in the message body 104, such as a "WEB URL" for accessing a WEB server, a "VoD URL" for accessing a VoD (Video on Demand) server that performs unicast video delivery, a "multicast group address" for accessing a video delivery server that performs multicast or broadcast video delivery, a "telephone number" for making a telephone call, or "text information" indicating a message, or "terminal control information" indicating information for controlling one of the terminals, is set.

In the message body 104, specific information on the content defined by the message type 103 described above such as the "WEB URL", "VoD URL", "multicast group address", or "telephone number", a message main body, or the like is stored.

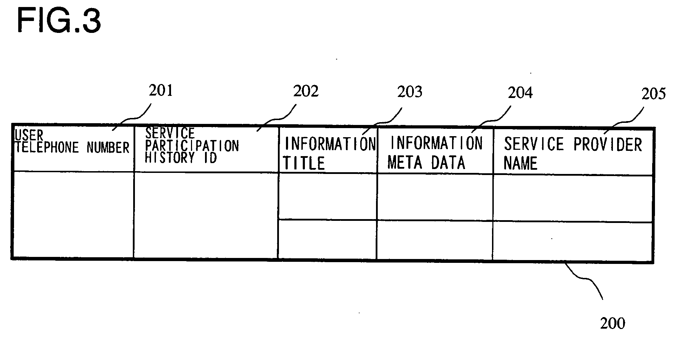

Now, recording of a service history of each of the terminals 11 to 13 by the service control server 23 will be described. Fig. 3 shows an example of a service participation history management table held by the service control server 23 for each terminal.

Referring to Fig. 3, the service participation history management table 200 is configured by including items such as a user telephone number 201, a service participation history ID 202, an information title 203, information meta data 204, and a service provider name 205.

The user telephone number 201 indicates information for uniquely identifying the user provided from the communication company that provides the network 1.

The service participation history ID 202 indicates an identifier given by each service provider. Using the service participation history ID 202, the service control server 23 identifies to which user the history belongs.

The information title 203 indicates the title of the information content of the information delivery server 24 viewed or listened to by each terminal (user). Incidentally, the information delivery server 24 can identify the user by referring to the telephone number of the user or an IP address assigned to the user by the network 1.

The information meta data 204 indicates meta data information given to the information content of the information delivery server 24 described above.

Like the service provider name 101 in the message 100 in Fig. 2, the service provider name 205 indicates the name of the service provider that has provided information content to each terminal (user).

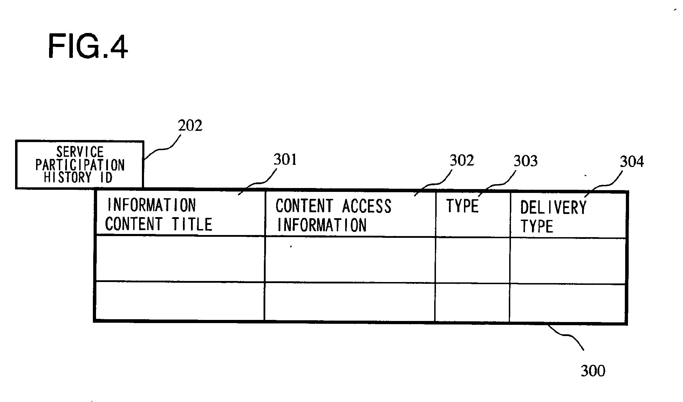

Retrieval (information collection) of information content to be delivered to each of the terminals 11 to 13 described before by the media retrieval server 22 will be described. Fig. 4 shows an example of a media collection management table held by the media retrieval server 22 for each user.

Referring to Fig. 4, the media collection management table 300 is configured by including items such as the service participation history ID 202 given from the service participation history management table 200, an information content title 301, content access information 302, a type 303, and a delivery type 304.

As described with reference to the service participation history management table 200, the service participation history ID 202 is uniquely assigned for each user. Thus, using this ID as a key, to which user the media collection management table 300 belongs can be uniquely identified.

The information content title 301 indicates the title name of information content to be delivered to the user, which has been retrieved (information on which has been collected) from the information delivery server 24, based on the service participation history of the service participation history management table 200.

The content access information 302 represents information for accessing the information content described above. The information content title 301 and the information on the content access information 302 are mapped into the message body 104 of the message 100 described above in the form of the "WEB URL", "VoD URL", "multicast group address", or message text information.

The type 303 represents the type of the information to be delivered to the user, or type information such as WEB, video delivery (VoD), (multicast or broadcast) video delivery, or text information. Information in the type 303 is mapped into the message type 103 of the message 100.

In the delivery type 304, command specifying information in accordance with a delivery type of the information content stored in the message body 104 of the message 100 described above is stored. A command to perform automatic reproduction or automatic updating is stored in the case of a real time delivery, for example. In the case of a storage (cache) method delivery, a command to perform storage is stored. Information on this delivery type 304 is mapped into the command 102 of the message 100.

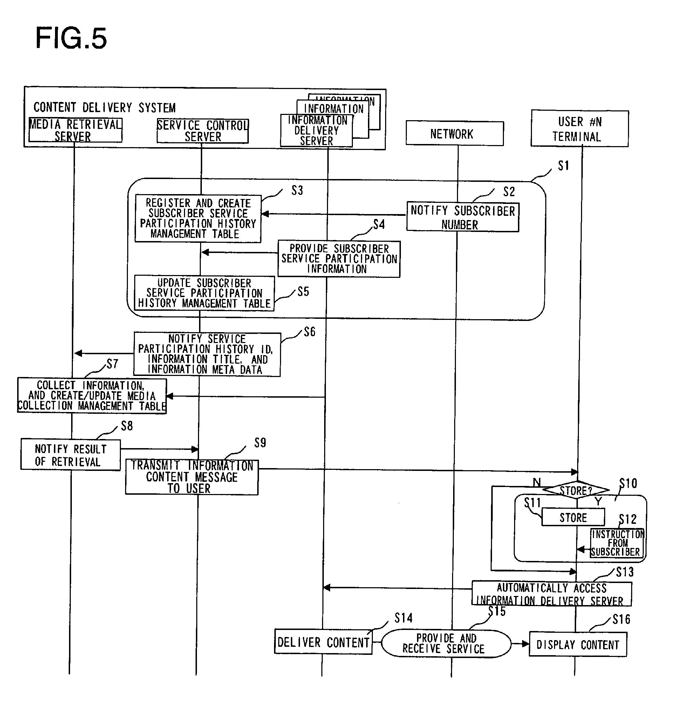

Next, an overall operation of this exemplary embodiment will be described in detail with reference to drawings. Fig. 5 is a sequence diagram showing a sequence of operations in this exemplary embodiment. The description will be given below, assuming that the user of the user #N terminal 13 subscribes to this service. The service is provided to the user #1 terminal 11, user #2 terminal 12 as well, using a same flow.

Referring to Fig. 5, first, the communication company of the network 1 provides to the service control server 23 of the content delivery system 21 the telephone number of the user #N terminal that has applied for this service (in step S2). Note, however, in the practical service operation, ID or other identification may be provided instead of the telephone number of the user for transmitting SIP/MESSAGE to the user terminal.

The service control server 23 creates the service participation history management table 200 for the user with the telephone number thereof provided (in step S3).

Next, the information delivery server 24 provides to the service control server 23 information content information requested from the user #N terminal 13 at a predetermined time interval (in step S4). The information content information herein refers to an information title, information meta data, and the like to be written into the service participation history management table 200.

Next, the service control server 23 updates the service participation history management table 200 for the corresponding user, based on the content provided from the information delivery server 24 (in step S5).

Procedures from registration in the service to service participation history collection, described above, are brought together as step S1.

The service control server 23 notifies to the media retrieval server 22 the service participation history ID 202, information title 203, information meta data 204 of the user which have been updated in the service participation management table 200 (in step S6).

The media retrieval server 22 refers to the information title 203 and the information meta data 204, retrieves (collect information from) information content that matches with an attribute or a preference of the user from the information delivery server 24, and creates or updates the media collection management table 300 of the user of interest (in step S7).

Next, the media retrieval server 22 notifies a result of retrieval to the service control server 23 (in step S8). The result of retrieval includes the information content title 301, content access information 302, type 303, and delivery type 304 in the media collection management table 300.

The service control server 23 refers to the result of retrieval received from the media retrieval server 22, creates a message 100, and delivers the created message 100 to the user #N terminal 13 (in step S9). The message 100 is herein delivered using a SIP MESSAGE function.

The user #N terminal 13 receives the message and recognizes contents of the message. Depending on a combination of a message type 103 and the command 102 specified in the message 100, it is determined whether storage in the user #N terminal is performed or not.

First, when the message type 103 indicates a WEB URL for accessing the WEB server, a VoD URL for accessing a VoD (Video on Demand server) that performs the unicast video delivery, or a multicast group address for accessing a video delivery that performs multicast video delivery or broadcast video delivery, and when the command 102 is a command for specifying a storage (cache) operation, the user #N terminal 13 stores all information specified in the message body 104 of the message 100 in the user #N terminal (in step S11). Then, the user #N terminal waits for an instruction from a remote controller of the user or the like (in step S12). The user #N terminal then starts the application, thereby starting the access (in step S13).

By an application starting process using the storage (in step S11) and the user instruction (in step S12) (brought together as step S10), the user can asynchronously browse, view, and listen to application information notified from the service provider at a time convenient for the user.

On the other hand, when the message type 103 indicates the WEB URL for accessing the WEB server, the VoD URL for accessing the VoD (Video on Demand server) that performs the unicast video delivery, or the multicast group address for accessing a video delivery (server) that performs the multicast video delivery or the broadcast video delivery, and when the command 102 is a command for performing real time reproduction of information specified in the message body 104 of the message 100 or performing real time updating of the application being displayed, the user #N terminal 13 skips step S10 (including steps S11 and S12), automatically starting the application, thereby accessing the information delivery server 24 (in step S13).

The information delivery server 24 that has received the access described above starts content delivery (in step S14). Then, the user #N terminal 13 displays information received from the information delivery server 24 on a monitor or a TV screen (in step S16) through provision or reception of the service (in step S15).

As described above, information content is selected, based on the service in which the user has actually participated. Delivery of the information content that matches with the attribute or preference of the user therefore becomes possible.

### [Second Exemplary Embodiment]

In the first exemplary embodiment of the present invention described above, the description was given, assuming that one service provider prepares for the media retrieval server, service control server, and information delivery server. It may also be so arranged that a plurality of service providers cooperate to one another, thereby allowing delivery of information content stored in respective information delivery servers of the service providers. This allows further enrichment of information content that can be received by the user.

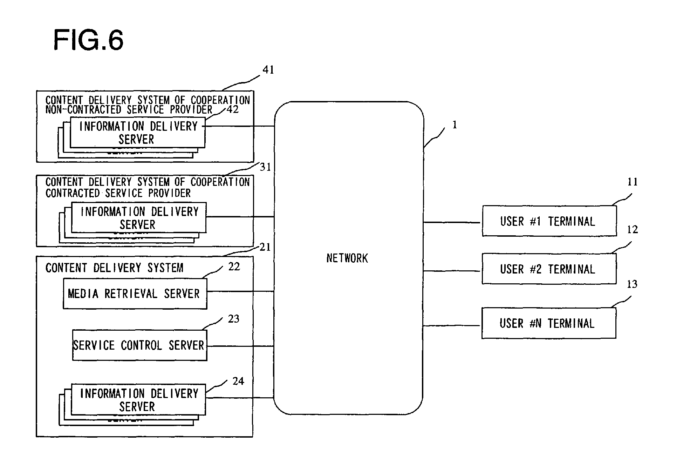

A second exemplary embodiment of the present invention which presumes that a plurality of service providers are present will be described below. Fig. 6 is a block diagram showing a system configuration in the second exemplary embodiment of the present invention. Referring to Fig. 6, in addition to the configuration of the first exemplary embodiment described above, a content delivery system 31 of a service provider that has concluded a cooperation (association) contract with the service provider that manages the content delivery system 21 (hereinafter referred to as a "cooperation contracted service provider") and a content delivery system 41 of a service provider that has not concluded the cooperation contract (hereinafter referred to as a "cooperation non-contracted service provider) are shown.

The content delivery system 31 of the cooperation contracted service provider and the content delivery system 41 of the cooperation non-contracted service provider include an information delivery server 32 and an information delivery server 42 for delivering information content to the user, respectively.

The service control server 23 of the content delivery system 21 holds an information provider management table 400 for managing cooperation with other service providers described above.

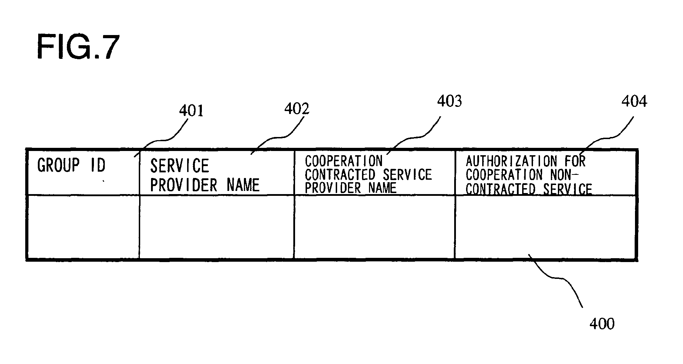

Fig. 7 shows an example of the information provider management table 400 held by the service control server 23. Referring to Fig. 7, the information provider management table 400 is configured by including items of a group ID 401, a service provider name 402, a cooperation contracted service provider name 403, and an authorization for cooperation non-contracted service provider 404.

In the group ID 401, an identifier uniquely given by the service provider of the content delivery system 21, for performing group control over the service providers is stored. In the service provider name 402, the name of the service provider (service provider name of the content delivery system 21 in this exemplary embodiment) that holds the media retrieval server 22 and the service control server 23 and can cause other service provider to participate in information content delivery using a user service history is stored.

In the cooperation contracted service provider name 403, the name of the service provider that has contracted cooperation with a service provider having the service provider name 402 when service and information content are provided to each user.

In the authorization for cooperation non-contracted service provider 404, a flag indicating whether the information content delivery is authorized to the cooperation non-contracted service provider in a pertinent group, or the like is stored.

The media retrieval server 22 operates, targeting information content in the information delivery server 32 of the cooperation contracted service provider as well for retrieval (information collection), in addition to information content in the information delivery server 24, in accordance with an instruction from the service control server 23.

When the media retrieval server 22 receives an instruction to the effect that information content in the information delivery server 42 of the cooperation non-contracted service provider is also targeted for the retrieval (information collection), the media receiver server 22 operates, targeting the information content in the information delivery server 42 of the cooperation non-contracted service provider as well for the retrieval (information collection).

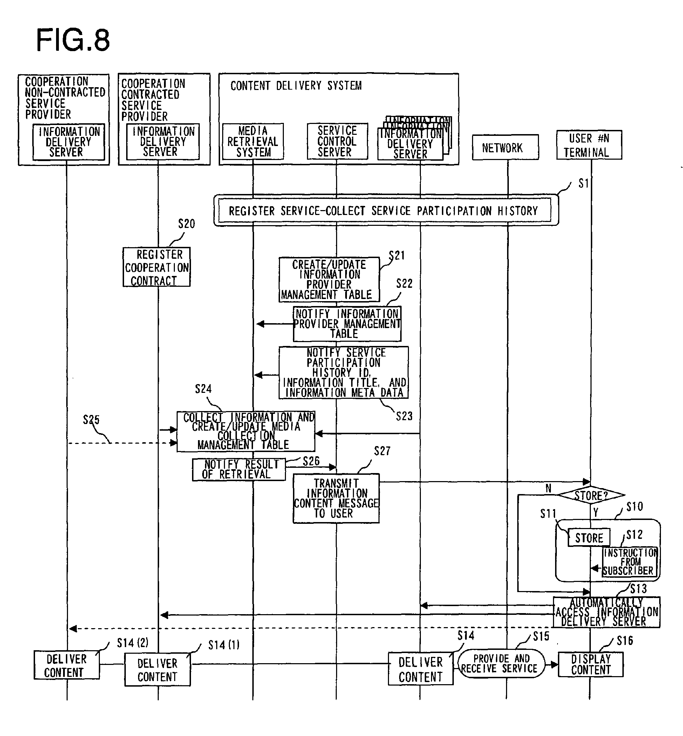

Next, an overall operation of this exemplary embodiment will be described in detail with reference to drawings. Fig. 8 is a sequence diagram showing a sequence of operations in this exemplary embodiment.

Step S1 in Fig. 8 shows an abbreviation of a sequence of operations from service registration to service participation history collection. These operations are the same as the operations (from steps S2 to S5) of the first exemplary embodiment described above.

Next, when a service provider that desires to contract cooperation with the service provider that manages the content delivery system 21 registers a cooperation contract through the network 1 (in step S20), the service control server 23 creates or updates the information provider management table 400 (in step S21). Then, the service control server 23 notifies the media retrieval server 22 that information content is collected from the information delivery server 32 of the service provider that has concluded the cooperation contract as well (in step S22).

Further, the service control server 23 notifies the media retrieval server 22 of the service participation history ID 202, information title 203, and information meta data 204 of the user who has updated the service participation history management table 200 (in step S23).

The media retrieval server 22 refers to the received information title 203 and the information meta data 204, retrieves (collects information from) information content that matches with an attribute or a preference of the user from the information delivery server 24 and the information delivery server 32, and creates or updates the media collection management table 300 of the user of interest (in step S24).

When the authorization for cooperation non-contracted service provider 404 of the information provider management table 400 indicates "authorized", the media retrieval server 22 will retrieve (collects information from) information content in the information delivery server 42 of the cooperation non-contracted service provider as well (in step S25).

Next, notification of a result of retrieval to the service control server 23 is performed (in step S26). Then, a message based on the result of retrieval is created and transmitted (in step S27).

Operations from steps S 10 to step S16 are the same as those in the first exemplary embodiment described above. However, the number of choices on the information delivery server that delivers information content is increased for the user. Thus, it becomes possible to receive service from the information delivery server 32 of the cooperation contracted service provider (in step S14(1)) and receive service from the information delivery server 42 of the cooperation non-contracted service provider (in step S14(2)).

As described above, development into a configuration in which a plurality of service providers participate becomes possible. By cooperating with or authorizing participation of each service provider that has specialty information content which is attractive and competitive, it becomes possible to provide each user an opportunity to obtain high quality information content that matches with the attribute or preference of the user.

Though the above description was given about the preferred exemplary embodiments of the present invention, various variations can be made without departing from the gist of the invention. In the exemplary embodiments described above, for example, various functions demanded for the content delivery system were described to be shared by the media retrieval server 22, service control server 23, and information delivery server 24, respectively. However, depending on the scale of the network 1 and the type and size of information content, it is also possible to integrate respective functions of the servers or further subdivide the functions.

The tables that were referred to when the above-mentioned exemplary embodiments were described, respectively, are also illustrated for briefly explaining the present invention. Any type of table that can record a service history, a cooperation service provider, and the like, and can record information content that has been retrieved based on the service history may be used. Alternatively, other configuration may be adopted.

In the exemplary embodiments described above, the media retrieval server 22 was described to retrieve (collects information from) information content, by referring to the information title 203 and the information meta data 204. When an attribute or a preference of each user is known otherwise (e.g. from other sources), it is naturally possible to use these items, thereby retrieving (collecting information from) the information content.
It should be noted that other objects, features and aspects of the present invention will become apparent in the entire disclosure and that modifications may be done without departing the gist and scope of the present invention as disclosed herein and claimed as appended herewith.
Also it should be noted that any combination of the disclosed and/or claimed elements, matters and/or items may fall under the modifications aforementioned.

## Claims

1. A content delivery system that performs content delivery to a terminal conforming to a SIP (Session Initiation Protocol) comprising:
information delivery means for providing an information delivery service to said terminal;
service history recording means for recording a service history of said terminal;
media retrieval means for referring to the service history of said terminal recorded by said service history recording means, retrieving content matching with a service selection tendency of said terminal from among contents capable of being delivered from said information delivery means to said terminal, and generating content access information for accessing the content; and
message transmission means for transmitting to said terminal a command to be executed by said terminal and the content access information, using a SIP MESSAGE method;
said content delivery system causing said terminal to execute the command and access said information delivery means, using the content access information.

2. The content delivery system according to claim 1, wherein said media retrieval means specifies a delivery type, in addition to the content access information; and
said message transmission means generates the command based on the delivery type.

3. The content delivery system according to claim 1 or 2, wherein
said media retrieval means targets an information delivery server of other service provider connected to a network as well, for the retrieval of the content matching with the service selection tendency of said terminal.

4. The content delivery system according to any one of claims 1 through 3, wherein
said information delivery means is made up of an information delivery server;
said service history recording means and said message transmission means are made up of an information control server; and
said media retrieval means is made up of a media retrieval server.

5. The content delivery system according to any one of claims 1 through 4, wherein
said media retrieval means can collect information from any information delivery means depending on either a cooperation contract or else.

6. A terminal comprising:
a function of receiving from the content delivery system according to any one of claims 1 through 5 the command to be executed and the content access information, using said SIP MESSAGE method;
said terminal executing the command and receiving the content using the content access information.

7. A content delivery method to be carried out by using a content delivery system comprising information delivery means, service history recording means, media retrieval means, and message transmission means, the method comprising:
(a) recording a service history of a terminal and transmitting the recorded service history of said terminal to a media retrieval means, by said service history recording means;
(b) referring to the service history of said terminal thus received, retrieving information on content matching with a service selection tendency of said terminal from content capable of being delivered from information delivery means to said terminal, and generating content access information for accessing the content, by said media retrieval means;
(c) transmitting to said terminal a command to be executed by said terminal and the content access information, using a SIP MESSAGE method, by said message transmission means; and
(d) executing said command transmitted and accessing said information delivery means, using the content access information, by said terminal.
